Europäisches Patentamt

(19) European Patent Office

Office européen des brevets

(11) Numéro de publication : **0 249 669 B1**

(12) **FASCICULE DE BREVET EUROPEEN**

(45) Date de publication du fascicule du brevet :
30.01.91 Bulletin 91/05

(51) Int. Cl.⁵ : **B29C 45/14, B29C 33/12**

(21) Numéro de dépôt : 86401333.9

(22) Date de dépôt : **18.06.86**

(54) **Procédé, machine et moule de fabrication de récipients, en matière injectée, comportant une pellicule formant revêtement externe, et récipients ainsi obtenus.**

(43) Date de publication de la demande :
23.12.87 Bulletin 87/52

(45) Mention de la délivrance du brevet :
30.01.91 Bulletin 91/05

(84) Etats contractants désignés :
AT BE CH DE GB IT LI LU NL SE

(56) Documents cités :
EP-A- 0 127 159
DE-A- 1 629 706
FR-A- 2 009 611
FR-E- 89 746
GB-A- 488 064
GB-A- 1 570 301
LU-A- 68 597
US-A- 3 463 845
US-A- 3 953 020

(56) Documents cités :
US-A- 4 204 824
US-A- 4 368 018
PATENTS ABSTRACTS OF JAPAN, vol. 6, no.
167 (M-153)[1045], 31 août 1982; & JP-A-57 82
030 (TAKARA KASEI KOGYO K.K.) 22-05-1982

(73) Titulaire : TOLKKI OY
Kalkkimaentie 2
03100 Nummela (FI)

(72) Inventeur : Dromigny, Pierre
54, avenue de Versailles
F-75016 Paris (FR)
Inventeur : Schottli, Théodore
Formenbau
CH-8253 Diessenhofen (CH)

(74) Mandataire : Bonnetat, Christian
CABINET BONNETAT 23, Rue de Léningrad
F-75008 Paris (FR)

## Description

La présente invention concerne un procédé, une machine et un moule de fabrication, par injection de matière synthétique, de récipients comportant une pellicule formant revêtement externe au moins partiel et faisant partie intégrante des récipients ; et les récipients ainsi obtenus.

Lorsque l'on souhaite, en particulier, décorer de tels récipients obtenus par injection de matière synthétique, ou y apposer des indications concernant notamment la composition du produit contenu, une technique courante consiste à imprimer le décor et les indications, directement, sur le récipient déjà réalisé. Cette technique présente de nombreux inconvénients du fait notamment de la mauvaise qualité de l'impression sur la matière, en général du polypropylène ou analogue, du récipient ; et en raison de la nécessité d'une opération supplémentaire pour ce faire, opération qui augmente les coûts et la durée de fabrication. Il serait donc avantageux de pouvoir décorer de tels récipients à l'aide de pellicules rapportées, par exemple en papier ou en matière plastique mince.

Par ailleurs, par le document FR-A-89 746, on connaît un procédé de fabrication, par injection de matière synthétique, de récipients comportant une pellicule formant revêtement externe au moins partiel, et faisant partie intégrante des récipients, au moyen d'une machine d'injection comprenant, notamment, un moule constitué d'un élément mâle formant poinçon et d'un élément femelle formant matrice, et au moins une buse d'injection de matière synthétique, ledit procédé comprenant les étapes suivantes :

     – alimenter le moule en pellicules prédécoupées au format choisi ;

     – maintenir la pellicule appliquée contre l'élément mâle pendant la fermeture du moule ; et,

     – injecter de la matière synthétique dans l'espace laissé entre les éléments mâle et femelle lorsque ledit moule est fermé.

L'objet de ce procédé connu est de réaliser une assiette en matière plastique présentant en son centre un motif décoratif en relief recouvert d'une feuille de tissu ou préférablement d'une feuille métallique.

A cet effet, la feuille est posée au sommet d'un poussoir pouvant coulisser dans une coquille inférieure. Dans une première étape, après avoir refermé le moule en abaissant la coquille supérieure sur le poussoir, lorsque l'on commence à envoyer de la matière plastique sous pression par l'orifice d'injection, la feuille métallique est emboutie dans l'empreinte du poussoir en épousant les contours de celle-ci, des ressorts étant suffisamment puissants pour maintenir tout le poussoir appliqué contre la coquille supérieure.

Dans une seconde étape, en continuant à envoyer de la matière plastique par l'orifice d'injection, la pression augmente et finalement l'emporte sur la poussée des ressorts, provoquant ainsi l'abaissement du poussoir.

Ainsi, dans ce procédé connu, ledit poussoir est repoussé, non pas sous l'action de l'élément male, mais par la matière injectée elle-même, dans la seconde étape précitée, alors que le moule est déjà fermé. De plus, ladite pellicule est emboutie, ledit poussoir étant une partie active du moule.

Il en résulte que ce procédé connu n'est pas utilisable pour la décoration de récipients injectés à l'aide de pellicules de papier, plastique souple ou analogue.

L'objet de la présente invention est de permettre une telle décoration par la mise en oeuvre du procédé connu décrit ci-dessus, ladite pellicule formant un revêtement extérieur pour un tel récipient, faisant partie intégrante de celui-ci.

A cet effet, la présente invention concerne un procédé du type rappelé ci-dessus, caractérisé en ce que, pendant la fermeture du moule, le maintien de la pellicule contre l'élément mâle est réalisé, au moins partiellement, par appui constant, contre la face de la pellicule en regard de l'élément femelle, d'un coulisseau logé dans la cavité formée par l'élément femelle, saillant, en position ouverte du moule, et déplaçable sous l'action de l'élément mâle, dans la direction d'avance de celui-ci, à l'encontre d'une force de rappel ; et en ce que l'injection de matière synthétique s'effectue à partir de l'élément mâle, et contre la face de la pellicule en regard de l'élément mâle.

Ainsi, dans la présente invention, le coulisseau sert uniquement à maintenir la pellicule pendant la fermeture du moule, c'est-à-dire jusqu'au moment où le poinçon est au fond de la matrice, le déplacement du coulisseau se faisant sous l'action dudit poinçon. La pellicule n'est donc pas emboutie, ce qui évite son déchirement, mais simplement plaquée parfaitement contre les parois de la cavité de la matrice, ce qui n'implique qu'un très faible déplacement de la pellicule sans risque de déformation ou de rupture de celle-ci.

Selon une autre caractéristique de l'invention, l'injection de matière synthétique s'effectue dans la zone centrale de l'extrémité de l'élément mâle ; la matière injectée plaquant le revêtement contre les parois de la cavité de l'élément femelle du moule, et repoussant complètement la tête du coulisseau dans le logement prévu dans le fond de ladite cavité.

La présente invention concerne également une machine de fabrication, par injection de matière synthétique, de récipients comportant une pellicule formant revêtement externe au moins partiel, et faisant partie intégrante des récipients, du type comprenant :

     – un moule constitué d'un élément mâle, formant poinçon, susceptible de coopérer avec un élément femelle, formant matrice ;

     – au moins une buse d'injection de la matière synthétique dans l'espace laissé entre lesdits éléments mâle et femelle, en position fermée du moule ;

– un dispositif d'amenée des pellicules prédécoupées dans ledit moule ; et,

– des moyens de maintien de la pellicule contre l'élément mâle pendant la fermeture du moule, caractérisée en ce que la buse d'injection de matières synthétiques est portée par l'élément mâle, et en ce que les moyens de maintien comprennent au moins un coulisseau logé dans la cavité formée par l'élément femelle, saillant en position ouverte du moule, et susceptible de coopérer avec l'élément mâle pour maintenir la pellicule contre ce dernier pendant la fermeture du moule, ledit coulisseau étant déplaçable, sous l'action de l'élément mâle, dans la direction d'avance de celui-ci, à l'encontre d'une force de rappel.

Avantageusement, le dispositif d'amenée de la pellicule est disposé généralement au-dessus du moule et comprend un chariot, solidaire du bâti portant l'élément mâle du moule, et comportant, à sa partie supérieure, un magasin pour les pellicules prédécoupées et, à sa partie inférieure, un moyen de retenue temporaire pour une pellicule, ledit chariot pouvant coulisser sur une glissière et ayant sa face avant percée d'un orifice pour le passage d'une buse d'aspiration des pellicules ; la glissière étant munie, à son extrémité distale par rapport au chariot, en position ouverte du moule, d'une fente pour le passage, une à une, des pellicules ; ladite glissière étant reliée, à cette extrémité, à des montants solidaires du bâti de l'élément femelle du moule, et munis de rainures dans lesquelles peuvent glisser les pellicules.

Conformément à la présente invention, un moule de fabrication, par injection de matière synthétique, de récipients comportant une pellicule formant revêtement externe au moins partiel, et faisant partie intégrante des récipients, du type comprenant :

– un élément mâle, formant poinçon, susceptible de coopérer avec un élément femelle, formant matrice ;

– au moins une buse d'injection de la matière synthétique dans l'espace laissé entre lesdits éléments mâle et femelle en position fermée du moule ; et,

– des moyens de maintien de la pellicule contre l'élément mâle pendant dans la fermeture du moule, est caractérisé en ce que la buse d'injection de matière synthétique est portée par l'élément mâle ; et en ce que les moyens de maintien comprennent au moins un coulisseau logé dans la cavité formée par l'élément femelle, saillant, en position ouverte du moule, et susceptible de coopérer avec l'élément mâle pour maintenir la pellicule contre ce dernier pendant la fermeture du moule, ledit coulisseau étant déplaçable, sous l'action de l'élément mâle, dans la direction d'avance de celui-ci, à l'encontre d'une force de rappel.

Selon une autre caractéristique de l'invention, le coulisseau précité comprend une tige dont une extrémité est reliée à un moyen générateur de la force de rappel, tel que notamment un piston pouvant coulisser dans un cylindre prévu au delà de la cavité de l'élément femelle, dans la direction d'avance de l'élément mâle, un ressort ou analogue, et dont l'autre extrémité porte une tête aplatie susceptible de venir en appui contre la face de la pellicule en regard de l'élément femelle.

En particulier, l'axe du coulisseau précité est au moins sensiblement parallèle à la direction d'avance de l'élément mâle du moule, et notamment confondu avec l'axe central de la cavité de l'élément femelle.

Selon encore une autre caractéristique de l'invention, le fond de la cavité de l'élément femelle comprend un logement pour la tête du coulisseau.

De plus, la buse d'injection peut être prévue dans le corps de l'élément mâle du moule de façon à déboucher au moins sensiblement au centre de l'extrémité de l'élément mâle en regard de l'élément femelle, c'est-à-dire en regard de la tête du coulisseau.

La présente invention sera mieux comprise, et d'autres détails, caractéristiques et avantages de celle-ci apparaîtront plus clairement à la lumière de la description explicative qui va suivre faite en référence aux dessins schématiques annexés, illustrant un mode de réalisation actuellement préféré de l'invention, et dans lesquels :

– la figure 1 est une vue schématique en perspective d'une machine de fabrication de récipients, en matière injectée, selon l'invention ;

– la figure 2 est une vue partielle, en coupe longitudinale, du moule selon l'invention, en position ouverte ; et,

– la figure 3 est une vue partielle, en coupe longitudinale, du moule selon l'invention en position fermée.

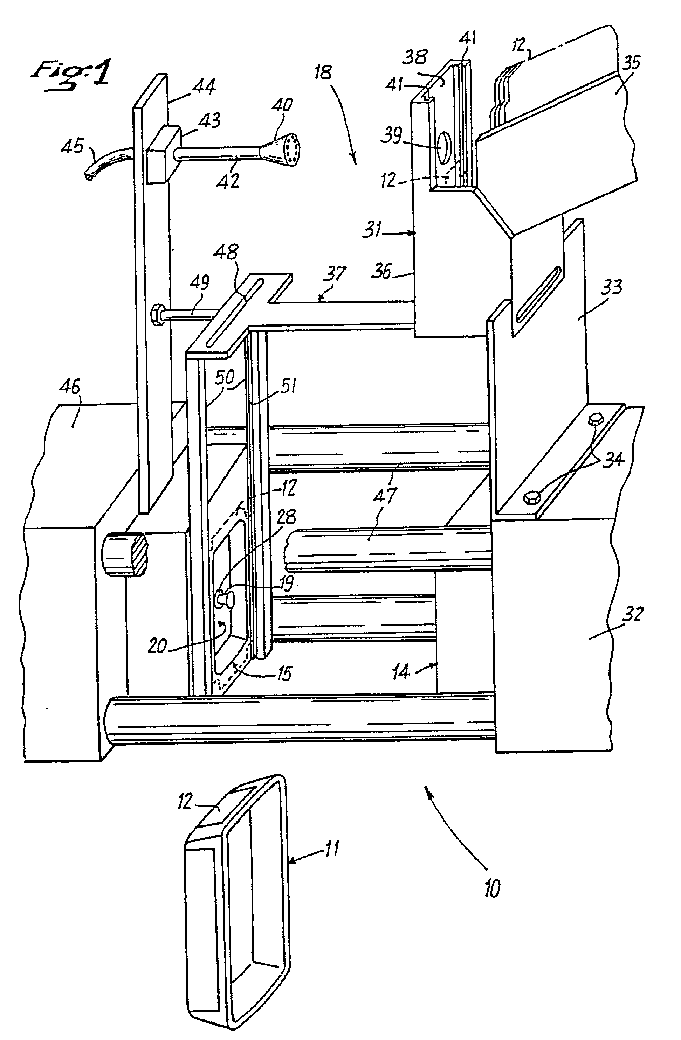

La machine 10, selon l'invention, est destinée à la fabrication, par injection de matière synthétique, telle que notamment du polypropylène ou analogue, de récipients 11 comportant une pellicule 12 formant revêtement externe au moins partiel, et faisant partie intégrante des récipients 11, (on notera que, dans la figure 1, le récipient 11 est représenté à plus grande échelle que la machine 10).

La machine 10 comprend un moule 13 constitué d'un élément mâle 14, formant poinçon, susceptible de coopérer avec un élément femelle 15, formant matrice ; au moins une buse d'injection 16 de la matière synthétique dans l'espace 17 laissé entre les éléments mâle 14 et femelle 15, en position fermée du moule 13 ; un dispositif d'amenée 18 des pellicules 12 dans le moule 13 ; et des moyens de maintien 19 de la pellicule contre l'élément mâle 14 pendant la fermeture du moule 13.

En particulier, selon l'invention, la buse 16 d'injection de matière synthétique est portée par l'élément mâle 14, et les moyens de maintien comprennent au moins un coulisseau 19 logé dans la cavité 20 formée par l'élément femelle 15, de façon à être saillant, en position ouverte du moule 13, dans cette cavité. Le coulisseau 19 est susceptible de coopérer avec l'élément mâle 14 pour maintenir la pellicule 12 contre ce dernier pendant la fermeture du moule, ledit coulisseau 19 étant déplaçable, sous l'action de l'élément mâle 14, dans la direction d'avance de celui-ci, à l'encontre d'une force de rappel.

Le coulisseau 19 comprend une tige 21 dont une extrêmité 22 est reliée à un moyen générateur de la force de rappel. Comme illustré, ce moyen peut être constitué d'un piston 23 pouvant coulisser dans un cylindre 24 prévu au-delà de la cavité 20 de l'élément femelle 15, dans la direction d'avance de l'élément mâle 14. Le cylindre 24 comporte, dans sa partie de fond, des moyens 25 d'introduction et d'échappement d'un fluide approprié, reliés à une source de fluide non représentée. Le piston et le cylindre peuvent être remplacés par toute autre moyen analogue approprié, tel que notamment un ressort. L'autre extrêmité 26 de la tige 21 du coulisseau 19 porte une tête applatie 27 susceptible de venir en appui contre la face 12b de la pellicule 12 en regard de l'élément femelle 15.

De manière générale, l'axe du coulisseau 19 est au moins sensiblement parallèle à la direction d'avance de l'élément mâle 14 du moule 13 lors de la fermeture de celui-ci, et est notamment confondu avec l'axe central de la cavité 20 de l'élément femelle 15.

On prévoit dans le fond de cette cavité 20 de l'élément femelle 15 un logement 28 pour la tête 27 du coulisseau 19, en position fermée du moule.

Comme représenté, la buse 16 d'injection est prévue dans le corps 29 de l'élément mâle 15 du moule 13 et débouche au moins sensiblement au centre de l'extrêmité 30 de l'élément mâle 15 en regard de l'élément femelle 14, c'est-à-dire en regard de la tête 27 du coulisseau 19.

Il est bien entendu que, selon la forme du récipient à réaliser, les éléments mâle et femelle du moule présenteront des formes différentes. Dans l'exemple de réalisation illustré notamment par la figure 1, destiné à la réalisation de barquettes ayant une forme sensiblement parallélépipèdique rectangulaire, la cavité de l'élément femelle du moule possède une forme adaptée à la réalisation de ce type de récipient, c'est-à-dire parallélépipèdique rectangulaire, l'élément mâle du moule ayant de même une forme correspondante.

En se référant maintenant plus particulièrement à la figure 1 le dispositif d'amenée 18 des pellicules est disposé généralement au-dessus du moule 13 et comprend un chariot 31 solidaire du bâti 32 portant l'élément mâle 14 du moule. Cette solidarisation peut être notamment réalisée à l'aide d'une plaque 31 fixée au bâti 32 par des moyens de fixation 34 appropriés, tels que notamment vis, boulons ou analogues, ainsi qu'au chariot 31 par tout moyen approprié de fixation (non représenté). A la partie supérieure du chariot 31, on prévoit un magasin 35 pour les pellicules 12 prédécoupées, tandis que sa partie inférieure 36 est conformée pour retenir temporairement une desdites pellicules. Le chariot 31 peut coulisser sur une glissière 37, et a sa face avant 38 percée d'un orifice 39 pour le passage d'une buse 40 d'aspiration des pellicules. En outre, des rainures 41 sont prévues, du côté intérieur dudit chariot, le long des bords de la face avant 38 de celui-ci. La buse d'aspiration 40 est prolongée par une tige 42 passant à travers un boîtier 43 monté sur une poutrelle 44 de support solidaire du bâti 46 de l'élément femelle 15 du moule 13. La tige 42 de la buse 40 est reliée à un conduit d'aspiration 45, lui-même relié à une source de vide (non représentée). On notera que les bâtis 32 et 46 des éléments mâle 14 et femelle 15 du moule sont reliés par des tiges coulissantes 47 permettant l'ouverture et la fermeture du moule.

La glissière 37 est munie, à son extrêmité distale par rapport au chariot 31, en position ouverte du moule, d'une fente 48 pour le passage, une à une, des pellicules ; ladite glissière 37 étant fixée, à cette extrêmité, à la poutrelle 44 par une tige 49, et étant reliée, à cette même extrêmité, à des montants 50 solidaires du bâti 46 de l'élément femelle 15 du moule et munis de rainures 51 dans lesquelles peuvent glisser les pellicules jusqu'à des moyens formant butées (non représentés), adaptés selon la forme particulière des pellicules et prévus de façon à retenir chaque pellicule en regard de la cavité 20 de l'élément femelle 15 du moule.

On expliquera maintenant ci-après le fonctionnement de la machine selon l'invention.

Les pellicules 12 prédécoupées au format choisi sont stockées dans le magasin 35 prévu à la partie supérieure du chariot 31, l'une derrière l'autre et en regard de la face avant 38 du chariot. Dans l'exemple représenté, les pellicules présentent une forme de croix comportant une partie centrale rectangulaire et des volets latéraux rectangulaires rabattables. Il est bien évident que toute autre forme souhaitable peut être utilisée. Néanmoins l'exemple de réalisation illustré de la machine selon l'invention est plus particulièrement adapté à la forme représentée des pellicules, notamment en ce qui concerne le dispositif d'amenée 18 de celles-ci.

Le dispositif d'amenée 18 fonctionne en synchronisme avec l'ouverture et la fermeture du moule 13 de la manière suivante.

A partir de la position ouverte initiale du moule représentée sur la figure 1, lors de la fermeture de celui-ci, le chariot 31, solidaire du bâti 32 de l'élément mâle 14 mobile du moule, va glisser le long de la glissière 37 jusqu'à se trouver au niveau de la partie élargie de celle-ci comportant la fente 48. Dans cette position, la buse d'aspiration 40 ayant passé à travers l'orifice 39 prévu dans la face avant 38 du chariot 31, se trouve à proximité de la première pellicule du magasin 35 qu'elle aspire. La pellicule en se courbant légèrement vient de ce fait, d'une part, se plaquer contre la buse 40, et, d'autre part, se loger, par ses volets latéraux, dans les rainures 41 prévues sur les bords de la face avant 38 du côté interne du chariot 31, et qui se font face. Lorsque le moule s'ouvre de nouveau, la buse 40 d'aspiration s'éloigne de la pellicule qu'elle maintenait plaquée contre elle, et celle-ci tombe, par gravité, dans la partie inférieure 36 du chariot 31 en glissant dans les rainures 41, partie inférieure 36 où elle est retenue dans la position représentée en pointillés sur la figure 1.

Lors du cycle suivant, quand le moule est fermé, cette pellicule passe dans la fente 48 (le chariot 31 étant placé immédiatement au-dessus de celle-ci) et glisse entre les montants 50 dans les rainures 51, tandis qu'une autre pellicule est aspirée par la buse 40. Lors de l'ouverture consécutive du moule, la première pellicule se positionne en regard de la cavité 20 de l'élément femelle 15 du moule grâce aux butées qui l'arrêtent dans la position requise (en pointillés sur la figure 1), tandis que la deuxième pellicule reste en position d'attente dans la partie inférieure 36 du chariot 31.

Nous nous intéresserons maintenant ci-après plus particulièrement au fonctionnement du moule 13 proprement dit.

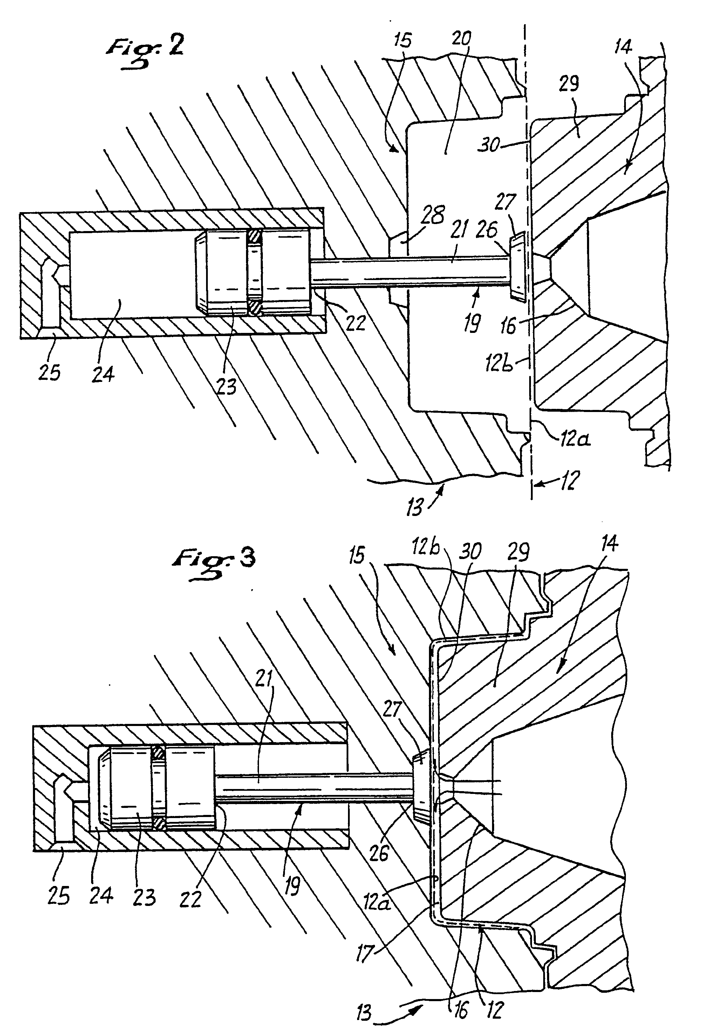

En se référant aux figures 2 et 3, une pellicule 12 ayant été placée devant l'élément femelle 15 du moule 13 de la façon indiquée ci-dessus, l'ensemble moule-pellicule se trouve dans la position illustrée par la figure 2, c'est-à-dire correspondant à l'ouverture du moule ; la tête 27 du coulisseau 19 étant, dans cette position, légèrement en retrait par rapport à la pellicule 12. Dans une première étape, le moule est fermé par avance de la partie mâle 14 mobile du moule 13 dans la cavité 20 de la partie femelle 15. Pendant la fermeture du moule 13, le maintien de la pellicule 12 contre l'élément mâle 14 est réalisé, au moins partiellement, par appui constant, contre la face 12b de la pellicule 12 en regard de l'élément femelle 15, de la tête du coulisseau 19 qui se déplace sous l'action de l'élément mâle 14, dans la direction d'avance de celui-ci, à l'encontre de la force de rappel exercée sur le piston 23. Ainsi, au fur et à mesure de l'avance de l'élément mâle 14 dans la cavité 20 de l'élément femelle 15, le coulisseau 19 se rétracte en s'enfonçant dans l'embase de la partie femelle 15, et notamment dans le cylindre 24 ; jusqu'à ce que le moule 13 atteigne sa position fermée illustrée par la figure 4. A ce moment, du fait de l'espace qui est laissé entre les éléments mâle et femelle pour l'injection de matière synthétique, la pellicule n'est pas parfaitement plaquée contre les parois de la cavité 20 de l'élément femelle et la tête du coulisseau, sur laquelle prend appui la pellicule, dépasse légèrement de son logement 28 prévu dans le fond de la cavité 20. L'injection de matière synthétique s'effectue alors, par la buse 16 d'injection, dans la zone centrale de l'extrémité 30 de l'élément mâle 14 du moule 13. On peut bien évidemment utiliser toute matière synthétique appropriée, telle que par exemple du polypropylène à environ 200°C. La matière synthétique injectée contre la face 12a de la pellicule 12 en regard de l'élément mâle 14 plaque la pellicule 12 contre les parois de la cavité 20 de l'élément femelle 15 du moule 13 et repousse, en même temps, complètement la tête du coulisseau 19 dans son logement 28 ; de sorte que la pellicule 12 est en fait incorporée à la face externe du récipient réalisée, en faisant partie intégrante de celui-ci.

Enfin, lors de l'ouverture consécutive du moule, le récipient 11 pourra être éjecté de la cavité 20 de l'élément femelle du moule, et recueilli, en même temps que le coulisseau 19 reprendra, sous l'action de la force de rappel précitée, sa position initiale en extension ; l'éjection pouvant être notamment réalisée par ledit coulisseau.

Il est bien évident que l'on peut utiliser pour la réalisation des pellicules, tout matériau approprié, c'est-à-dire notamment compatible avec l'impression d'un décor ou d'indications pratiques, ainsi qu'avec l'incorporation dans le matériau du récipient considéré. En particulier, les pellicules peuvent être réalisées dans la même matière que celle du récipient, telle que par exemple du polypropylène ou également en papier.

## Revendications

1. Procédé de fabrication, par injection de matière synthétique, de récipients comportant une pellicule formant revêtement externe au moins partiel, et faisant partie intégrante des récipients, au moyen d'une machine d'injection comprenant, notamment, un moule constitué d'un élément mâle formant poinçon et d'un élément femelle formant matrice, et au moins une buse d'injection de matière synthétique, ledit procédé comprenant les étapes suivantes :
– alimenter le moule en pellicules prédécoupées au format choisi ;
– maintenir la pellicule appliquée contre l'élément mâle pendant la fermeture du moule ; et,
– injecter de la matière synthétique dans l'espace laissé entre les éléments mâle et femelle lorsque ledit moule est fermé,
caractérisé en ce que, pendant la fermeture du moule (13), le maintien de la pellicule (12) contre l'élément mâle (14) est réalisé, au moins partiellement, par appui constant, contre la face (12b) de la pellicule (12) en regard de l'élément femelle (15), d'un coulisseau (19) logé dans la cavité (20) formée par l'élément femelle (15), saillant, en position ouverte du moule (13), et déplaçable sous l'action de l'élément mâle (14), dans la direction d'avance de celui-ci, à l'encontre d'une force de rappel ; et en ce que l'injection de matière synthétique s'effectue à partir de l'élément mâle (14), et contre la face (12a) de la pellicule (12) en regard de l'élément mâle (14).

2. Procédé selon la revendication 1, caractérisé en ce que l'injection de matière synthétique s'effectue dans la zone centrale de l'extrêmité (30) de l'élément mâle (14) ; la matière injectée plaquant la pellicule (12) contre les parois de la cavité (20) de l'élément femelle (15) du moule (13), et repoussant complètement la tête (27) du coulisseau (19) dans un logement correspondant (28) prévu dans le fond de ladite cavité (20).

3. Machine de fabrication, par injection de matière synthétique, de récipients comportant une pellicule formant revêtement externe au moins partiel, et faisant partie intégrante des récipients, du type comprenant :
- un moule constitué d'un élément mâle, formant poinçon, susceptible de coopérer avec un élément femelle, formant matrice ;
- au moins une buse d'injection de la matière synthétique dans l'espace laissé entre lesdits éléments mâle et femelle, en position fermée du moule ;
- un dispositif d'amenée des pellicules prédécoupées dans ledit moule ; et,
- des moyens de maintien de la pellicule contre l'élément mâle pendant la fermeture du moule, caractérisée en ce que la buse (16) d'injection de matière synthétique est portée par l'élément mâle (14) du moule (13) ; et en ce que les moyens de maintien comprennent au moins un coulisseau (19) logé dans la cavité (20) formée par l'élément femelle (15), saillant en position ouverte du moule (13), et susceptible de coopérer avec l'élément mâle (14) pour maintenir la pellicule (12) contre ce dernier pendant la fermeture du moule (13), ledit coulisseau (19) étant déplaçable, sous l'action de l'élément mâle (14), dans la direction d'avance de celui-ci, à l'encontre d'une force de rappel.

4. Machine selon la revendication 3, caractérisée en ce que le dispositif d'amenée (18) de la pellicule (12) est disposé généralement au-dessus du moule (13) et comprend un chariot (31), solidaire du bâti (32) portant l'élément mâle (14) du moule (13), et comportant, à sa partie supérieure, un magasin (35) pour les pellicules (12) prédécoupées et, à sa partie inférieure, un moyen de retenue (36) temporaire pour une pellicule, ledit chariot pouvant coulisser sur une glissière (37) et ayant sa face avant (38) percée d'un orifice (39) pour le passage d'une buse (40) d'aspiration des pellicules ; la glissière (37) étant munie, à son extrêmité distale par rapport au chariot (31), en position ouverte du moule, d'une fente (48) pour le passage, une à une, des pellicules ; ladite glissière (37) étant reliée, à cette extrêmité, à des montants (50) solidaires du bâti (46) de l'élément femelle (15) du moule (13), et munis de rainures (51) dans lesquelles peuvent glisser les pellicules.

5. Moule de fabrication, par injection de matière synthétique, de récipients comportant une pellicule formant revêtement externe au moins partiel, et faisant partie intégrante des récipients, du type comprenant :
- un élément mâle, formant poinçon, susceptible de coopérer avec un élément femelle, formant matrice ;
- au moins une buse d'injection de la matière synthétique dans l'espace laissé entre lesdits éléments mâle et femelle, en position fermée du moule ; et,
- des moyens de maintien de la pellicule contre l'élément mâle pendant dans la fermeture du moule, caractérisé en ce que la buse (16) d'injection de matière synthétique est portée par l'élément mâle (14) ; et en ce que les moyens de maintien comprennent au moins un coulisseau (19) logé dans la cavité (20) formée par l'élément femelle (15), saillant en position ouverte du moule (13), et susceptible de coopérer avec l'élément mâle (14) pour maintenir la pellicule (12) contre ce dernier pendant la fermeture du moule, ledit coulisseau (19) étant déplaçable, sous l'action de l'élément mâle (14), dans la direction d'avance de celui-ci, à l'encontre d'une force de rappel.

6. Moule selon la revendication 5, caractérisé en ce que le coulisseau (19) précité comprend une tige (21) dont une extrêmité (22) est reliée à un moyen générateur de la force de rappel, tel que notamment un piston (23) pouvant coulisser dans un cylindre (24) prévu au-delà de la cavité (20) de l'élément femelle (15), dans la direction d'avance de l'élément mâle (14) ; un ressort ou analogue, et dont l'autre extrêmité (26) porte une tête aplatie (27) susceptible de venir en appui contre la face (12b) de la pellicule (12) en regard de l'élément femelle (15).

7. Moule selon la revendication 5 ou la revendication 6, caractérisé en ce que l'axe du coulisseau (19) précité est au moins sensiblement parallèle à la direction d'avance de l'élément mâle (14) du moule (13), et notamment confondu avec l'axe central de la cavité (20) de l'élément femelle (15).

8. Moule selon la revendication 6 ou la revendication 7, caractérisé en ce que le fond de la cavité (20) de l'élément femelle (15) comprend un logement (28) pour la tête (29) du coulisseau (19).

9. Moule selon l'une quelconque des revendications 6 à 8, caractérisé en ce que la buse (16) d'injection est prévue dans le corps (29) de l'élément mâle (15) du moule (13) et débouche au moins sensiblement au centre de l'extrêmité (30) de l'élément mâle (15) en regard de l'élément femelle (14), c'est-à-dire en regard de la tête (27) du coulisseau (19).

10. Machine selon la revendication 3 ou la revendication 4, caractérisée en ce qu'elle comporte un moule selon l'une quelconque des revendications 6 à 9.

**Ansprüche**

1. Verfahren zur Herstellung von aus Kunststoff gespritzten Gefäßen mit einem zumindest teilweise eine äußere Verkleidung bildenden Film, der einen integrierenden Bestandteil des Gefäßes bildet, unter Verwendung einer Spritzmaschine, die insbesondere eine Form umfaßt, die aus einem einen Stempel bildenden männlichen und einem eine Matrize bildenden weiblichen Element sowie mindestens einer Einspritzdüse für den Kunststoff besteht, wobei dieses Verfahren die folgenden Stufen umfaßt :
– Einspeisen eines in einem ausgewählten Format zugeschnittenen Films in die Form ;
– Halten des Films in einer gegen das männliche Element angedrückten Stellung während des Schließens der Form,
– Einspritzen des Kunststoffs in den zwischen dem männlichen und dem weiblichen Element freigelassenen Zwischenraum, wenn die Form geschlossen ist, dadurch gekennzeichnet, daß während des Schließens der Form (13) das Halten des Films (12) am männlichen Element (14) wenigstens zum Teil durch den gleichbleibenden Auflagedruck eines Schiebers (19) auf der dem weiblichen Element (15) zugewandten Seite (12b) des Films (12) verwirklicht wird, welcher Schieber in der durch das weibliche Element (15) gebildeten Vertiefung (20) angeordnet ist und in der offenen Stellung der Form (13) vorsteht, daß der Schieber (19) unter der Wirkung des männlichen Elements (14) in dessen Vorschubrichtung gegen eine Rückstellkraft verschiebbar ist und daß das Einspritzen des Kunststoffs vom männlichen Element (14) aus und gegen die dem männlichen Element (14) zugewandte Seite (12a) des Films (12) erfolgt.

2. Verfahren nach Anspruch 1, dadurch gekennzeichnet, daß das Einspritzen des Kunststoffs sich in der mittleren Zone des vorstehenden Teils (30) des männlichen Elements (14) vollzieht und daß der eingespritzte Werkstoff den Film (12) an die Wände der Vertiefung (20) des weiblichen Elements (15) der Form (13) anlegt und den Kopf (27) des Schiebers (19) vollkommen in eine am Boden der Vertiefung (20) vorgesehene entsprechende Aussparung (28) eindrückt.

3. Maschine zur Herstellung von aus Kunststoff gespritzten Gefäßen mit einem zumindest teilweise eine äußere Verkleidung bildenden Film, der einen integrierenden Bestandteil des Gefäßes bildet, mit :
– einer Form, bestehend aus einem einen Stempel bildenden männlichen Element, das dazu geeignet ist

mit einem eine Matrize bildenden weiblichen Element zusammenzuwirken ;
– zumindest einer Düse zum Einspritzen des Kunststoffs in den in der geschlossenen Stellung der Form zwischen dem männlichen und dem weiblichen Element freigelassenen Zwischenraum ;
– einer Vorrichtung zur Zuführung der zugeschnittenen Filme in die Form ; und
– Mitteln zum Halten des Films in einer an das männliche Element angedrückten Stellung während des Schließens der Form, dadurch gekennzeichnet, daß die Düse (16) zum Einspritzen des Kunststoffs vom männlichen Element (14) der Form (13) getragen ist, daß die Haltemittel wenigstens einen Schieber (19) umfassen, welcher in der durch das weibliche Element (15) gebildeten Vertiefung (20) angeordnet ist, in der offenen Stellung der Form (13) vorsteht und geeignet ist, mit dem männlichen Element (14) zusammenzuwirken, um den Film (12) während des Schließens der Form (13) in einer an das männliche Element angedrückten Stellung zu halten, und daß der Schieber (19) unter der Wirkung des männlichen Elements (14) in dessen Vorschubrichtung gegen eine Rückstellkraft verschiebbar gelagert ist.

4. Maschine nach Anspruch 3, dadurch gekennzeichnet, daß die Zuführvorrichtung (18) für den Film (12) im wesentlichen über der Form (13) angeordnet ist und einen Wagen (31) umfaßt, der mit dem das männliche Element (14) der Form (13) tragenden Gestell (32) verbunden ist und an seiner oberen Partie ein Magazin (35) für die zugeschnittenen Filme (12) sowie an seiner unteren Partie ein Haltemittel (36) zum zeitweiligen Festhalten eines Films aufweist, daß der Wagen auf einer Gleitschiene (37) verschiebbar gelagert ist und an seiner Frontwand (38) eine Öffnung (39) für den Durchgriff einer Düse (40) zum Ansaugen der Filme aufweist, daß die Gleitschiene (37) an ihrem in der offenen Stellung der Form von dem Wagen (31) entfernt liegenden Ende einen Spalt (48) aufweist, durch den die Filme einer nach dem anderen durchfallen können, und daß die Gleitschiene (37) an diesem Ende mit Schienen (50) verbunden ist, die an dem Gestell (46) des weiblichen Elements (15) der Form (13) angebracht und mit Führungsnuten (51) versehen sind, in denen die Filme gleiten können,

5. Form zur Herstellung von aus Kunststoff gespritzten Gefäßen mit einem zumindest teilweise eine äußere Verkleidung bildenden Film, der einen integrierenden Bestandteil des Gefäßes bildet, mit :
– einem einen Stempel bildenden männlichen Element, das dazu geeignet ist, mit einem eine Matrize bildenden weiblichen Element zusammenzuwirken ;
– zumindest einer Düse zum Einspritzen des Kunststoffs in den in der geschlossenen Stellung der Form zwischen dem männlichen und dem weiblichen Element freigelassenen Zwischenraum ; und
– Mitteln zum Halten des Films in einer an das männliche Element angedrückten Stellung während des Schließens der Form,

dadurch gekennzeichnet, daß die Düse (16) zum Einspritzen des Kunststoffs vom männlichen Element (14) getragen ist, daß die Haltemittel wenigstens einen Schieber (19) umfassen, welcher in der durch das weibliche Element (15) gebildeten Vertiefung (20) angeordnet ist, in der offenen Stellung der Form (13) vorsteht und geeignet ist, mit dem männlichen Element (14) zusammenzuwirken, um den Film (12) während des Schließens der Form (13) in einer an das männliche Element angedrückten Stellung zu halten, und daß der Schieber (19) unter der Wirkung des männlichen Elements (14) in dessen Vorschubrichtung gegen eine Rückstellkraft verschiebbar gelagert ist.

6. Form nach Anspruch 5,
dadurch gekennzeichnet, daß der Schieber (19) eine Stange (21) aufweist, deren eines Ende (22) mit einem Mittel zur Erzeugung der Rückstellkraft verbunden ist, insbesondere mit einem Kolben (23), der in einem in Vorschubrichtung des männlichen Elements (14) hinter der Vertiefung (20) des weiblichen Elements (15) angeordneten Zylinder (24) verschiebbar ist, oder mit einer Feder o. dgl., und deren anderes Ende (26) einen abgeflachten Kopf (27) trägt, der geeignet ist, mit der dem weiblichen Element (15) zugewandten Oberfläche (12b) des Films (12) in Anlage zu kommen,

7. Form nach Anspruch 5 oder Anspruch 6,
dadurch gekennzeichnet, daß die Achse des Schiebers (19) wenigstens ungefähr zu der Vorschubrichtung des männlichen Elements (14) der Form (13) parallel ist und gleichzeitig die Mittelachse der Vertiefung (20) des weiblichen Elements (15) bildet.

8. Form nach Anspruch 6 oder Anspruch 7,
dadurch gekennzeichnet, daß der Boden der Vertiefung (20) des weiblichen Elements (15) eine Aussparung (28) für den Kopf (27) des Schiebers (19) aufweist.

9. Form nach einem der vorhergehenden Ansprüche 6 bis 8,
dadurch gekennzeichnet, daß die Düse (16) zum Einspritzen im Körper (29) des männlichen Elements (14) der Form (13) angeordnet ist und wenigstens annähernd in der Mitte des Vorsprungs (30) des männlichen Elements (14) mündet, der dem weiblichen Element (15), d. h. dem Kopf (27) des Schiebers (19) zugewandt ist.

10. Maschine nach Anspruch 3 oder Anspruch 4, dadurch gekennzeichnet, daß sie eine Form nach einem der Ansprüche 6 bis 9 aufweist.

# Claims

1. Process for the manufacture, by injection of synthetic material, of receptacles comprising a film constituting an at least partial external coating and forming an integral part of the receptacles, by means of an injection machine comprising in particular a mould consisting of a punch forming male element and a die forming female element, and at least one injection nozzle for synthetic material, the said process comprising the following stages :

– feeding the mould with films precut to the chosen format ;

– holding the film applied against the male element during the closure of the mould ; and

– injecting synthetic material into the space between the male and female elements, remaining when the mould is closed,

characterized in that, during the closure of the mould (13), the film (12) is held against the male element (14) at least partially by constant abutting against the face (12b) of the film (12) opposite the female element (15), of a sliding block (19) housed in the cavity (20) formed by the female element (15), projecting, in the open position of the mould (13), and being movable, under the action of the male element (14) in the direction of forward movement thereof, against a return force ; and in that the injection of synthetic material is made from the male element (14), and against the face (12a) of the film (12) opposite the male element (14).

2. Process according to claim 1,
characterized in that the injection of synthetic material is made in the central zone of the end (30) of the male element (14) ; the injected material applying the film (12) against the walls of the cavity (20) of the female element (15) of the mould (13), and completely pushing the head (27) of the sliding block (19) into a corresponding housing (28) provided at the bottom of the cavity (20).

3. Machine for the manufacture, by injection of synthetic material, of receptacles comprising a film constituting an at least partial external coating and forming an integral part of the receptacles, of the type comprising :

– a mould consisting of a punch forming male element capable of interacting with a die forming female element ;

– at least one nozzle for injecting the synthetic material into the space between the male and female elements, remaining when the mould is closed ;

– a device for feeding the mould with precut films ; and

– means for holding the film against the male element during the closure of the mould,

characterized in that the injection nozzle (16) for synthetic material is carried by the male element (14) of the mould (13) ; and in that the holding means comprise at least one sliding block (19) housed in the cavity (20) formed by the female element (15), projecting, in the open position of the mould (13), and capable of interacting with the male element (14) to hold the film (12) against the latter during the closure of the mould (13), the sliding block (19) being movable, under the action of the male element (14) in the direction of forward movement thereof, against a return force.

4. Machine according to claim 3, characterized in that the feeding device (18) for the film (12) is generally disposed above the mould (13) and comprises a carriage (31), solid with the frame (32) carrying the male element (14) of the mould (13), and comprising, at its upper part, a magazine (35) for the precut films (12) and, at its lower part, a means (36) for temporarily holding a film, the carriage being capable to slide on a slide-bar (37) and its front face (38) having an orifice (39) for the passage of a suction nozzle (40) of the films ; the slide-bar (37) being provided, at its distal end with respect to the carriage (31), in the open position of the mould, with a slot (48) for the passage, one by one, of the films ; said slide-bar (37) being connected, at this end, to posts (50) solid with the frame (46) of the female element (15) of the mould (13), and provided with grooves (51) in which the films can slide.

5. Mould for the manufacture, by injection of synthetic material, of receptacles comprising a film constituting an at least partial external coating and forming an integral part of the receptacles, of the type comprising :
– a punch forming male element capable of interacting with a die forming female element ;
– at least one nozzle for injecting the synthetic material into the space between the male and female elements, remaining when the mould is closed ; and
– means for holding the film against the male element during the closure of the mould, characterized in that the injection nozzle (16) for synthetic material is carried by the male element (14); and in that the holding means comprise at least one sliding block (19) housed in the cavity (20) formed by the female element (15), projecting, in the open position of the mould (13), and capable of interacting with the male element (14) to hold the film (12) against the latter during the closure of the mould (13), the sliding block (19) being movable, under the action of the male element (14) in the direction of forward movement thereof, against a return force.

6. Mould according to claim 5, characterized in that the sliding block (19) comprises a rod (21), one end (22) of which is connected to a means generating the return force, such as a plunger (23) capable of sliding in a cylinder (24) provided beyond the cavity (20) of the female element (15), in the direction of forward movement of the male element (14), a spring or the like, and whose other end (26) carries a flattened head (27) capable of abutting against the face (12b) of the film (12) opposite the female element (15).

7. Mould according to claim 5 or claim 6, characterized in that the axis of the sliding block (19) is at least substantially parallel to the direction of forward movement of the male element (14) of the mould (13) and especially coincident with the central axis of the cavity (20) of the female element (15).

8. Mould according to claim 6 or claim 7, characterized in that the bottom of the cavity (20) of the female element (15) comprises a housing (28) for the head (27) of the sliding block (19).

9. Mould according to any one of claims 6 to 8, characterized in that the injection nozzle (16) is provided in the body (29) of the male element (15) of the mould (13) and opens at least substantially at the center of the end (30) of the male element (15) opposite the female element (14), that is opposite the head (27) of the sliding block (19).

10. Machine according to claim 3 or claim 4, characterized in that it comprises a mould according to any one of claims 6 to 9.

Fig.1

Fig. 2

Fig. 3